## Europäisches Patentamt
## European Patent Office
## Office européen des brevets

(11) Veröffentlichungsnummer: **0 019 313**
**B1**

(12) # EUROPÄISCHE PATENTSCHRIFT

(45) Veröffentlichungstag der Patentschrift:
**18.05.83**

(51) Int. Cl.³: **F 16 C 32/04**, G 01 R 11/14, G 01 F 1/10

(21) Anmeldenummer: **80200364.0**

(22) Anmeldetag: **22.04.80**

(54) **Magnetisches Schwebelager für einen Rotor.**

(30) Priorität: **12.05.79 DE 2919236**

(43) Veröffentlichungstag der Anmeldung:
**26.11.80 Patentblatt 80/24**

(45) Bekanntmachung des Hinweises auf die Patenterteilung:
**18.05.83 Patentblatt 83/20**

(84) Benannte Vertragsstaaten:
**CH FR GB LI NL**

(56) Entgegenhaltungen:
**DE-A-1 472 413**
**DE-A-2 342 767**
**DE-A-2 504 631**
**FR-A-2 309 754**
**US-A-3 623 835**
**US-A-3 698 775**
**US-A-3 791 704**
**US-A-3 929 390**
**US-A-4 065 189**

**Machine design, Band 35, 14. März 1963, Seiten 14, 15 Ohio, USA «Rotating shaft floats on electromagnet-corrected fields»**

(73) Patentinhaber: **Kernforschungsanlage Jülich Gesellschaft mit beschränkter Haftung, Postfach 1913, D-5170 Jülich (DE)**

(72) Erfinder: **Boden, Karl, Heinsberger Strasse 8, D-5170 Jülich (DE)**
Erfinder: **Fremerey, Johan K., Dr., Münsterberger Weg 4, D-5300 Bonn 1 (DE)**

(74) Vertreter: **Ackmann, Günther, Dr.-Ing., Claubergstrasse 24 Postfach 10 09 22, D-4100 Duisburg 1 (DE)**

## Magnetisches Schwebelager für einen Rotor

Die Erfindung betrifft ein magnetisches Schwebelager für einen Rotor, bestehend aus wenigstens zwei an einem Stator koaxial mit Abstand zueinander angeordneten ringförmigen Permanentmagneten und einer entsprechenden Anzahl mit im wesentlichen gleichem Abstand am Rotor angeordneten Permanentmagneten, wobei die Permanentmagnete beider Lagerteile paarweise in radialer Richtung einander abstossend magnetisiert und Vorrichtungen zum berührungslosen Abtasten der axialen Lage des Rotors und zum Regeln des Erregerstromes einer zwischen den Permanentmagneten am Stator angeordneten und den Rotor in axialer Richtung stabilisierenden Magnetspule vorgesehen sind.

Bei einer magnetischen Lagerung von Rotoren bzw. Wellen wird der Rotor ohne Berührung des Stators durch magnetische Feldkräfte in einer Gleichgewichtslage stabil gehalten. Bei dem in der DE-A-2 341 766 beschriebenen magnetischen Schwebelager sind an den Enden des Rotors mehrere nebeneinanderliegende Permanentmagnete und gegenüberliegend am Stator entsprechende Permanentmagnete angeordnet. Die axial nebeneinanderliegenden Permanentmagnete jeder Gruppe sind in radialer Richtung wechselweise magnetisiert. Eine entgegengesetzte Magnetisierung der radial einander gegenüberliegenden Permanentmagnete des Rotors und Stators bewirkt eine passive radiale Stabilisierung. Für eine getrennte aktive axiale Stabilisierung sind zwischen den Permanentmagnet-Gruppen des Stators elektromagnetische Ringspulen und gegenüberliegend am Rotor weitere Permanentmagnete angeordnet. Die elektromagnetischen Ringspulen werden dabei mittels eines Reglers und die axiale Lage des Rotors ermittelnden Sensoren mit einem Erregerstrom beaufschlagt. Diese Ausführung ist jedoch umständlich und platzraubend im Aufbau. Aus der Druckschrift MACHINE DESIGN, Bd. 35. 1963, S. 14, 15 ist weiterhin ein magnetisches Schwebelager bekannt, bei dem die aktive Stabilisierung in axialer Richtung durch eine axiale Lageverschiebung der dem Rotor zugeordneten Ferritscheibe in Verbindung mit zwei in axialer Richtung neben der Ferritscheibe liegenden, dem Stator zugeordneten Spulen erfolgt, wobei der an sich in der Normallage symmetrische Magnetfluss beider Spulen derart verändert wird, dass eine Rückstellkraft entsteht. Diese Ausführung hat den Nachteil, dass eine radial vorstehende Ferritscheibe am Rotor erforderlich ist, die zwischen die dem Stator zugeordneten Spulen ragt. Weiterhin besteht wegen der Notwendigkeit von zwei symmetrisch ausgebildeten Spulen und einer dazwischenliegenden Ferritscheibe in axialer Richtung ein grosser Platzbedarf. Insgesamt ist diese vorbekannte Ausführung schwer und umständlich im Aufbau.

Gegenüber diesem Stand der Technik liegt der Erfindung die Aufgabe zugrunde, ein magnetisches Schwebelager der gattungsgemässen Art derart weiterzubilden, dass eine passive radiale Stabilisierung sowie eine zusätzliche, aktiv geregelte axiale Stabilisierung des Rotors bei einem besonders einfachen und platzsparenden Aufbau möglich ist.

Diese Aufgabe wird durch die im Kennzeichen des Anspruches 1 aufgeführten Merkmale gelöst.

Durch diese Ausbildung wird bei einer axialen Verschiebung des Rotors das durch die Magnetspulen regelbare Magnetfeld dem passiven Magnetfeld der Permanentmagnete durch Überlagerung aufaddiert oder subtrahiert. Die Permanentmagnete bewirken daher nicht nur die passive radiale Stabilisierung, sondern sind auch Bauteile für die aktive axiale Stabilisierung. Sobald die Feldkräfte der Permanentmagnete bei einer axialen Verschiebung des Rotors bestrebt sind, den Rotor aus der Gleichgewichtslage heraus in Richtung dieser Verschiebung zu beschleunigen, erzeugt die entsprechend der gemessenen Axialverschiebung erregte Magnetspule eine entgegengesetzte stabilisierende Feldkraft. Der Rotor wird also bei einer axialen Lageverschiebung in die eine oder die andere Richtung ständig in seine Sollage zurückgeführt. Die stabilisierenden Axialkräfte sind gegenüber der axialen Lageverschiebung zeitlich in bekannter Weise derart phasenverschoben, dass sowohl rückstellende als auch dämpfende Kräfte den Rotor in seiner Sollage stabilisieren.

Um die axialen Feldkräfte der erregten Magnetspule zu erhöhen, kann zwischen den Permanentmagneten des Rotors ein ferromagnetischer Körper angeordnet sein. Weiterhin können an den Permanentmagneten Polschuhe aus Weicheisen vorgesehen sein, um deren Magnetfelder gleichförmiger auszubilden.

Das neuartige magnetische Schwebelager lässt sich bevorzugt für Einrichtungen, Geräte u.dgl. verwenden, bei denen der berührungslos zu lagernde Rotor axialen Krafteinwirkungen ausgesetzt ist. Eine besonders vorteilhafte Anwendung ergibt sich durch den Einbau in einen Turbinenradzähler zur Durchflussmessung von Flüssigkeiten oder Gasen in Rohrleitungen, wobei ein rohrförmiges Gehäuse von zwei mit Abstand zueinander angeordneten Permanentmagneten und einer dazwischenliegenden Magnetspule eingefasst ist und der im Gehäuse befindliche, mit Schaufeln ausgerüstete Rotor an seinen Enden mit zwei Permanentmagneten, einem dazwischenliegenden ferromagnetischen Körper und einem Signalgeber zur Übertragung von der Drehzahl des Rotors proportionalen Signalen auf einen am Gehäuse angebrachten Signalaufnehmer versehen ist.

Dabei geht die Erfindung davon aus, dass zum Messen der Durchflussmenge von Flüssigkeiten oder Gasen in Rohrleitungen mittelbar messende Flügelradzähler und Turbinenradzähler bekannt sind, bei denen jede Laufradumdrehung einer bestimmten Strömungsgeschwindigkeit und damit einem bestimmten Volumen des durchfliessenden Mediums entspricht. Während Flügelradzähler vorwiegend zur Messung von Flüssigkeiten verwendet werden, finden Turbinenradzähler auch zur Messung gasförmiger Medien Anwendung, wobei die Drehzahl des Rotors z.B. über einen induktiven Impulsabgriff gemessen werden kann. Bei den Turbinenradzählern ist der mit Schaufeln versehene Rotor axial in der Rohrleitung gelagert, wobei die Lagerteile am Rohr befestigt sind. Diese Lagerteile verändern jedoch die Strömungsverhältnisse und verursachen in Abhängigkeit von dem Rotorgewicht eine Lagerreibung, wodurch besonders beim Messen gasförmiger Medien die Messgenauigkeit erheblich verringert wird. Ausserdem verschleissen die Lagerteile, insbesondere bei einer Verschmutzung durch vom Medium zugeführte Schmutzteilchen, sehr schnell. Bei einer Anwendung für aggressive Medien müssen neben dem Rotor auch die Lagerteile aus resistenten Werkstoffen bestehen. Diese Nachteile gelten auch für den in der US-A-3 512 851 beschriebenen Turbinenradzähler, dessen axial angeordnete Wellenenden in Form magnetisierter Zapfen in entgegengesetzt polarisierten konischen Magnetlagern ruhen.

Demgegenüber sieht die Erfindung ein magnetisches Schwebelager für einen Rotor vor, der in einem nach aussen abgeschlossenen, strömenden flüssigen oder gasförmigen Medium angeordnet ist, wobei der axialen Strömungskraft eine entsprechende magnetische Feldkraft entgegenwirkt und für die axiale Stabilisierung Sorge trägt. Diese Stabilisierung wird auch bei schwankenden Strömungsgeschwindigkeiten ständig aufrechterhalten. Der mit einem derart gelagerten Rotor versehene Turbinenradzähler läuft in vorteilhafter Weise ohne jede Lagerreibung, so dass die Messgenauigkeit erheblich erhöht wird. Die Lagerung des Rotors wird auch nicht mehr durch vom Medium mitgerissene Schmutzteilchen u.dgl. beeinträchtigt, ist praktisch keinem Verschleiss ausgesetzt und bedarf keiner Wartung. Der Strömungskanal kann hermetisch gegenüber der Umwelt abgedichtet werden. Diese axiale Stabilisierung wird auch dann sichergestellt, wenn die Strömungsrichtung wechselt, da die Axiallagerung in beiden axialen Orientierungen wirkt. Der erfindungsgemässe Turbinenradzähler ist daher besonders für Atemmessgeräte geeignet, mit denen ein- und ausgeatmete Luft gemessen werden soll. Weitere Anwendungen ergeben sich für die Dosierung in Narkosegeräten, Desinfektionsgeräten u.dgl.

Der Erregerstrom für die Magnetspule kann in einfacher Weise dadurch geregelt werden, dass axiale Verschiebungen des Rotors berührungslos gemessen und entsprechende Messimpulse durch einen Regler in entsprechende Regelgrössen umgewandelt werden. Besonders geeignet ist eine induktive Messmethode, für welche an den Enden des Rotors je ein Metallring und am Gehäuse zwei Spulen angeordnet sind, die an den Regler angeschlossen sind. Die Magnetteile können am Rotor verschiedenartig angebracht sein. Beispielsweise besteht die Möglichkeit, den Rotor als Hohlwelle auszubilden, in welcher der ferromagnetische Körper und die beiden Permanentmagnete angeordnet sind. Der ferromagnetische Körper und die beiden Permanentmagnete können massiv oder vorzugsweise hülsenförmig ausgebildet sein.

Eine weitere Anwendung des erfindungsgemäss ausgebildeten magnetischen Schwebelagers ergibt sich durch den Einbau in einen Elektrizitätszähler zur Lagerung der vertikal angeordneten Läuferwelle. Gegenüber den hierfür bekannten magnetischen Schwebelagern ergibt sich der Vorteil einer kleineren Einbauhöhe, einer geringeren Anzahl von Bauteilen und einer einfacheren Montage. Ausserdem kann die Zählerscheibe nach der Fertigmontage während des Betriebes leicht justiert werden.

Die Erfindung ist in der Zeichnung in mehreren Ausführungsbeispielen dargestellt; es zeigt:

Fig. 1 ein magnetisches Schwebelager in einem mittleren Längsschnitt,

Fig. 2 ein Diagramm, welches die potentielle Energie und die von den Magnetfeldern erzeugten Axialkräfte in Abhängigkeit von der axialen Verschiebung des Rotors veranschaulicht.

Fig. 3 eine abgewandelte Ausführungsform eines magnetischen Schwebelagers in einem mittleren Längsschnitt,

Fig. 4 einen mit einem magnetischen Schwebelager versehenen Turbinenradzähler in einem Längsschnitt und

Fig. 5 eine mit einem magnetischen Schwebelager ausgerüstete Läuferwelle eines Elektrizitätszählers.

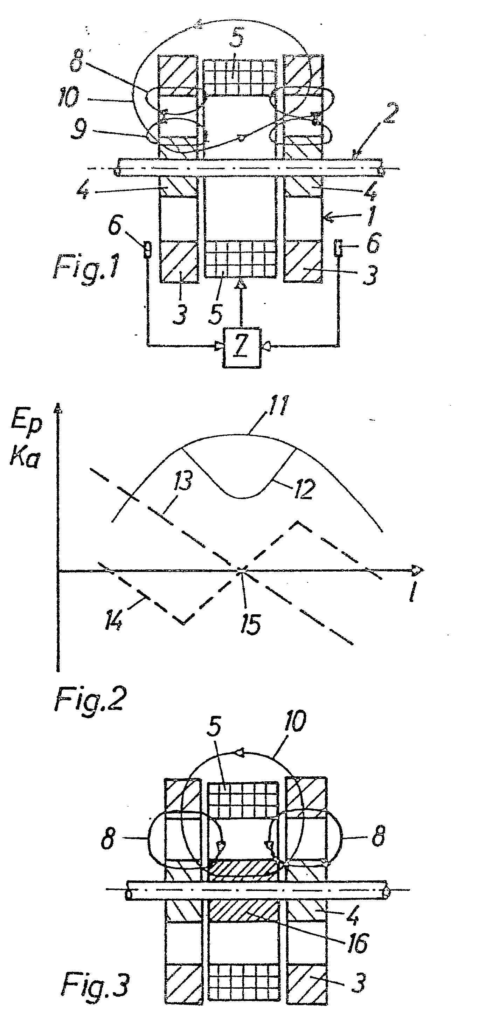

Das in Fig. 1 schematisch dargestellte magnetische Schwebelager besteht aus einem ortsfest gelagerten Stator 1, in dem ein Rotor 2, der in der Zeichnung als Welle dargestellt ist, berührungslos und koaxial gelagert ist. Am Stator 1 sind zwei ringförmige Permanentmagnete 3 koaxial und mit einem axialen Abstand zueinander angeordnet. Zwei ringförmige oder hülsenförmige Permanentmagnete 4 sind mit einem gleichen Abstand auf dem Rotor 3 befestigt. Weiterhin befindet sich zwischen den beiden Permanentmagneten 3 des Stators 1 eine den Zwischenraum ausfüllende ringförmige Magnetspule 5, wobei diese durch einen Abstand oder geeignete Spulenträger gegenüber den Permanentmagneten 3 isoliert ist.

Die Permanentmagnete sind in axialer Richtung derart magnetisiert, dass die Feldkomponenten 8 der beiden Permanentmagnete 3 und die Feldkomponenten 9 der beiden Permanentmagnete 4 entgegengesetzt orientiert sind, ebenfalls aber auch die Permanentmagnete beider Lagerteile paarweise in radialer Richtung einander abstossen. Zwischen den paarweise zugeordneten Permanentmagneten 3, 4 verlaufen die Feldkomponenten 8, 9 in dem vorhandenen ringförmigen Spalt jeweils axial nach aussen. Bei einer Erregung der Magnetspule 5 wird dem passiven Magnetfeld der vier Permanentmagnete 3, 4 ein regelbares Magnetfeld überlagert, dessen Feldkomponente 10 den koaxialen Feldkomponenten 9 der dem Rotor 2 zugehörigen Permanentmagnete 4 aufaddiert oder subtrahiert wird. In Fig. 1 wird die Feldkomponente 10 zu der Feldkomponente 9 des linken Permanentmagneten 4 addiert, auf der rechten Seite hingegen abgezogen. Durch eine Umkehrung der Richtung des Erregerstromes findet eine Überlagerung in entgegengesetzter Richtung statt.

Bestandteil des magnetischen Schwebelagers sind weiterhin Einrichtungen, welche eine axiale Verschiebung des Rotors 2 berührungslos abtasten, d.h. messen, und den Erregerstrom in Abhängigkeit von der axialen Verschiebung regeln. Das berührungslose Abtasten kann mit Hilfe geeigneter Signalgeber und -aufnehmer erfolgen, die z.B. induktiv, galvanomagnetisch, kapazitiv oder optisch arbeiten. In Fig. 1 sind schematisch zwei Feldplatten 6 gezeigt, deren Signale einem Regler 7 aufgegeben werden, welcher den Erregerstrom entsprechend regelt. Die Fig. 2 veranschaulicht durch die Kurve 11 die potentielle Energie $E_p$ des Rotors in Abhängigkeit von der axialen Verschiebung des Rotors 2 gegenüber der Sollage. Diese potentielle Energie fällt von einem Maximalwert in der Sollage nach beiden Seiten ab, so dass die von den Permanentmagneten bewirkte Axialkraft $K_a$ entsprechend der Kurve 13 mit zunehmendem Abstand vom Nullpunkt 15 zunimmt und den Rotor beschleunigen würde. Eine Gleichgewichtslage bei Verwendung der Permanentmagnete allein ist daher nur in der Sollage gegeben. Wird nun aber erfindungsgemäss die Magnetspule 5 mit zunehmender axialer Verschiebung des Rotors 2 aus seiner Sollage steigend erregt, so ergibt sich die in Kurve 12 gezeigte potentielle Energie, d.h. mit zunehmendem Abstand von der Sollage steigt die potentielle Energie in beiden Richtungen auf einen Maximalwert an und fällt erst dann wieder ab. Die zugehörige Kurve 14 lässt erkennen, dass die Axialkräfte bis zum Erreichen der maximalen potentiellen Energie umgekehrt werden und dadurch der Rotor 2 ständig zum Nullpunkt zurückgezogen wird.

Der Regler 7 wandelt die der axialen Lageabweichung proportionalen Widerstandswerte der Feldplatten 6 in Spannungen um, verstärkt diese und bereitet sie in einem elektronischen Phasenschieber-Netzwerk derart auf, dass der als Regelgrösse die Magnetspule 5 erregende Strom ein solches Magnetfeld erzeugt, welches je nach Stromrichtung den einen Permanentmagneten 4 des Rotors 2 anzieht und den anderen abstösst. Diese Kräfte wachsen mit steigendem Strom. Das Phasenschieber-Netzwerk bewirkt eine zeitliche Voreilung der Lagerkraft gegenüber einer Lageverschiebung des Rotors 2, so dass sowohl Rückstellkräfte als auch zeitlich voreilende Dämpfungskräfte auf den Rotor einwirken. Durch die Erregung der Magnetspule 5 mit nach Richtung und Grösse definierten Strömen wird die axiale Lage des Rotors 2 auf eine bestimmte Sollage oberhalb und innerhalb der passiven Gleichgewichtslage positioniert.

Bei der in Fig. 3 gezeigten Ausführung ist zwischen den Permanentmagneten 4 des Rotors 2 zusätzlich noch ein ring- bzw. hülsenförmiger ferromagnetischer Körper 16 angebracht, durch den die Feldkomponenten 10 der Magnetspule 5 verkürzt und verstärkt werden. In Fig. 3 sind die Feldlinien der Permanentmagnete 4 nicht eingezeichnet, die von den Feldkomponenten 10 addierend bzw. subtrahierend überlagert werden.

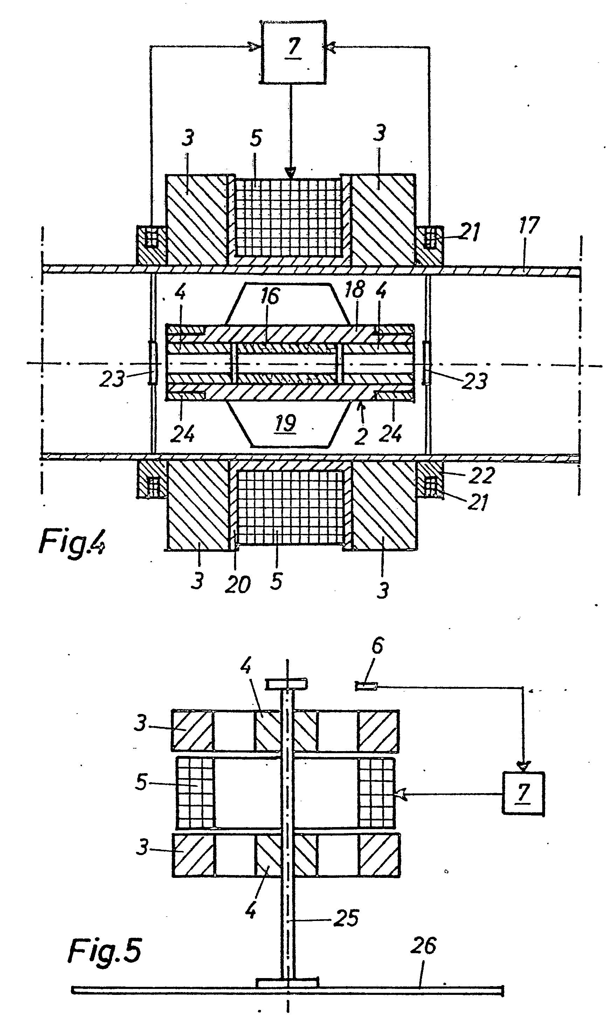

Der in Fig. 4 dargestellte Turbinenradzähler besteht im wesentlichen aus einem rohrförmigen Gehäuse 17, in dem ein mit Schaufeln 19 versehener Rotor 2 berührungslos und koaxial zur Rohrlängsachse mittels eines magnetischen Schwebelagers gelagert ist. Zugeordnet ist ein in der Zeichnung nicht dargestellter berührungslos arbeitender Drehzahlmesser in Form eines am Rotor angeordneten Impulsgebers, welcher der Drehzahl des Rotors entsprechende Impulse einem auf dem Rohr angebrachten Impulsnehmer zuführt. Aus der ermittelten Drehzahl und dem Strömungsquerschnitt lässt sich das Volumen des in der Zeiteinheit durch das Gehäuse durchgeströmten gasförmigen oder flüssigen Mediums errechnen. Das rohrförmige Gehäuse 17 ist an seinen Enden zweckmässig mit Einrichtungen zum Anschluss an Rohr- oder Schlauchleitungen versehen.

Das rohrförmige Gehäuse 17 besteht aus einem nichtmagnetisierbaren Werkstoff mit geringem elektrischen Leitwert, der ausserdem gegen das durchströmende Medium resistent ist und den Strömungskanal hermetisch vom Aussenraum abtrennt, so dass kein Leck durch Drehdurchführungen, Kabeldurchführungen usw. entstehen kann. Der in ihm koaxial gelagerte Rotor 2 besteht aus einer Hohlwelle 18, auf deren Mantel Schaufeln 19 befestigt sind, welche vom strömenden Medium beaufschlagt werden und den Rotor in eine der Strömungsgeschwindigkeit proportionale Drehung versetzen. In der Hohlwelle 18 ist in der Mitte ein hülsenförmiger ferromagnetischer Körper 16 und an den Enden je ein hülsenförmiger Permanentmagnet 4 fest angebracht, wobei zwischen den Permanentmagneten und dem ferromagnetischen Körper ein Luftspalt verbleibt oder ein Abstandshalter aus elektrisch nichtleitendem Werkstoff zugeordnet ist.

Am Aussenmantel des Gehäuses 17 befinden sich zwei ringförmige Permanentmagnete 3, zwischen denen eine elektrisch erregbare Magnetspule 5 liegt, deren Spulenträger mit 20 bezeichnet ist. Diese Magnetteile sind so angeordnet, dass die Permanentmagnete 3 gegenüber den Permanentmagneten 4 des Rotors 2 und die Magnetspule 5 gegenüber dem ferromagnetischen Körper 16 liegen. Die Permanentmagnete bestehen aus bekannten koerzitiven Werkstoffen, beispielsweise Bariumferrit oder Samarium-Kobalt. Sie sind entsprechend den Erläuterungen zu Fig. 1 magnetisiert. Die Wirkung des magnetischen Schwebelagers entspricht der Ausführung nach Fig. 3.

Um die magnetische Gegenkraft den Strömungsverhältnissen anzupassen, wird die axiale Verschiebung des Rotors 2 gemessen und mit Hilfe der Messwerte die elektrische Erregung der Magnetspule 5 geregelt. Hierfür ist an den Enden des Rotors 2 je ein Metallring 24, z.B. aus Aluminium, befestigt, während am Gehäuse 17 zwei in Spulenträgern 22 gelagerte Spulen 21 angebracht sind. Bei dieser Ausführung werden bei einer Axialverschiebung des Rotors 2 in den Spulen 21 auf induktivem Wege Messsignale erzeugt, die dem Regler 7 zugeführt werden. Die Messwerte können aber auch mit anderen berührungslos arbeitenden Messwertgebern und -aufnehmern, z.B. mittels galvanomagnetischer, kapazitiver oder optischer Messeinrichtungen ermittelt werden. Üblich sind z.B. Feldplatten oder Hallgeneratoren. Der Regler 7 regelt einen dem aufgenommenen Messwert proportionalen Erregerstrom für die Magnetspule 5 in der Weise, dass die Grösse der Axialkraft von der Stromamplitude und die Kraftrichtung von der Stromrichtung abhängt.

Um radiale Schwingungsenergie des Rotors 2 zu entziehen, können Dämpfungselemente 23 in Form elektrisch leitender Metallplättchen oder -scheiben vor den Enden des Rotors 2 angeordnet werden, welche in der Art einer Wirbelstrombremse wirken. In Fig. 1 ist beispielsweise je ein scheibenförmiges Dämpfungselement 23 mit mehreren Armen am Gehäuse 17 befestigt.

Fig. 5 zeigt eine mit einer Induktionsscheibe 26 versehene Läuferwelle 25 eines Elektrizitätszählers, die mit einem magnetischen Schwebelager versehen ist, welches dem der Fig. 1 entspricht.

**Patentansprüche**

1. Magnetisches Schwebelager für einen Rotor (2), bestehend aus wenigstens zwei an einem Stator (1) koaxial mit Abstand zueinander angeordneten ringförmigen Permanentmagneten (3) und einer entsprechenden Anzahl mit im wesentlichen gleichem Abstand am Rotor angeordneten Permanentmagneten (4), wobei die Permanentmagnete (3, 4) beider Lagerteile paarweise, in radialer Richtung einander abstossend magnetisiert und Vorrichtungen zum berührungslosen Abtasten der axialen Lage des Rotors (2) und zum Regeln des Erregerstromes einer zwischen den Permanentmagneten (3) am Stator (1) angeordneten und den Rotor (2) in axialer Richtung stabilisierenden Magnetspule (5) vorgesehen sind, dadurch gekennzeichnet, dass die Magnetspule (5) den Raum zwischen den Permanentmagneten (3) des Stators (1) ausfüllt und die axial gegeneinander versetzt angeordneten Permanentmagnete (3) des Stators (1) einerseits und die entsprechenden Permanentmagnete (4) des Rotors (2) anderseits in axialer Richtung einander abstossend magnetisiert sind.

2. Magnetisches Schwebelager nach Anspruch 1, dadurch gekennzeichnet, dass zwischen den Permanentmagneten (4) des Rotors (2) ein ferromagnetischer Körper (16) angeordnet ist.

3. Magnetisches Schwebelager nach Anspruch 1 oder 2, dadurch gekennzeichnet, dass die Permanentmagnete (3, 4) mit Polschuhen aus Weicheisen versehen sind.

4. Magnetisches Schwebelager nach einem der Ansprüche 1 bis 3, gekennzeichnet durch den Einbau in einen Turbinenradzähler zur Durchflussmessung von Flüssigkeiten oder Gasen in Rohrleitungen, wobei ein rohrförmiges Gehäuse (17) von zwei mit Abstand zueinander angeordneten Permanentmagneten (3) und einer dazwischenliegenden ringförmigen Magnetspule (5) eingefasst ist und der im Gehäuse befindliche, mit Schaufeln ausgerüstete Rotor (2) an seinen Enden mit zwei Permanentmagneten (4), einem dazwischenliegenden ferromagnetischen Körper (16) und einem Signalgeber zur Übertragung von der Drehzahl des Rotors proportionalen Signalen auf einen am Gehäuse angebrachten Signalaufnehmer versehen ist.

5. Magnetisches Schwebelager nach Anspruch 4, dadurch gekennzeichnet, dass an den Enden des Rotors (2) je ein Metallring (24) und am Gehäuse (17) zwei Spulen (21) angeordnet sind, welche an einen den Erregerstrom der Magnetspule (5) regelnden Regler (7) angeschlossen sind.

6. Magnetisches Schwebelager nach Anspruch 4 oder 5, dadurch gekennzeichnet, dass der Rotor (2) als Hohlwelle (18) ausgebildet ist, in welcher der ferromagnetische Körper (16) und die beiden Permanentmagnete (4) angeordnet sind.

7. Magnetisches Schwebelager nach einem der Ansprüche 4 bis 6, dadurch gekennzeichnet, dass der ferromagnetische Körper (16) und die Permanentmagnete (4) des Rotors (2) hülsenförmig ausgebildet sind.

8. Magnetisches Schwebelager nach einem der Ansprüche 1 bis 3, gekennzeichnet durch den Einbau in einen Elektrizitätszähler zur Lagerung der vertikal angeordneten Läuferwelle (25).

**Claims**

1. A magnetic bearing for a rotor (2), consisting of at least two annular permanent magnets (3) disposed in spaced relationship coaxially on a stator, and a corresponding number of permanent magnets (4) disposed with substantially the same spacing on the rotor, the permanent magnets (3, 4) of the two bearing parts being magnetized in pairs so as to repel one another radially, and means are provided for the contact-less sensing of the axial position of the rotor (2) and for controlling the energization current of a solenoid (5) disposed between the permanent magnets (3) on the stator (1) and stabilizing the rotor (2) axially, characterised in that the solenoid (5) fills the space between the permanent magnets (3) on the stator (1) and the axially relatively offset permanent magnets (3) on the stator (1), on the one hand, and the corresponding permanent magnets (4) on the rotor (2), on the other hand, are magnetized so as to repel one another axially.

2. A magnetic bearing according to claim 1, characterised in that a ferromagnetic member (16) is disposed between the permanent magnets (4) on the rotor (2).

3. A magnetic bearing according to claim 1 or 2, characterised in that the permanent magnets (3, 4) have soft iron pole shoes.

4. A magnetic bearing according to any one of claims 1 to 3, characterised by installation in a turbine wheel meter for measuring the flow of liquids or gases through pipelines, a tubular housing (17) being enclosed by two spaced permanent magnets (3) and an annular solenoid (5) disposed therebetween, and the bladed rotor (2) situated in the housing is provided, at its ends, with two permanent magnets (4), a ferromagnetic member (16) disposed therebetween, and signal transmitter for transmitting signals proportional to the speed of the rotor to s signal receiver disposed on the housing.

5. A magnetic bearing according to claim 4, characterised in that a metal ring (24) is provided at each end of the rotor (2) and two coils (21) are disposed on the housing (17) and are connected to a controller (7) controlling the energization current for the solenoid (5).

6. A magnetic bearing according to claim 4 or 5, characterised in that the rotor (2) is in the form of a hollow shaft (18) containing the ferromagnetic member (16) and the two permanent magnets (4).

7. A magnetic bearing according to any one of claims 4 to 6, characterised in that the ferromagnetic member (16) and the permanent magnets (4) of the rotor (2) are in the form of sleeves.

8. A magnetic bearing according to any one of claims 1 to 3, characterised by installation in an electricity meter for the purpose of mounting the vertical rotor shaft (25).

## Revendications

1. Palier flottant magnétique pour un rotor (2), constitué d'au moins deux aimants permanents (3) annulaires disposés à distance l'un de l'autre coaxialement sur un stator (1) et d'un nombre correspondant d'aimants permanents (4) disposés sur le rotor essentiellement à la même distance, les aimants permanents (3, 4) des deux parties de palier étant aimantés par paire de manière à se repousser dans la direction radiale et il est prévu des dispositifs de détection sans contact de la position axiale du rotor (2) et de régulation du courant d'excitation d'une bobine d'électroaimant (5) interposée entre les aimants permanents (4) sur le stator (1) et stabilisant le rotor (2) dans la direction axiale, caractérisé en ce que la bobine d'électroaimant (5) emplit l'espace compris entre les aimants permanents (3) du stator (1) et les aimants permanents (3) du stator (1) décalés axialement les uns par rapport aux autres, d'une part, et les aimants permanents (4) correspondants du rotor (2), d'autre part, sont aimantés de manière à se repousser dans la direction axiale.

2. Palier flottant magnétique suivant la revendication 1, caractérisé en ce qu'un corps ferromagnétique (16) est interposé entre les aimants permanents (4) du rotor (2).

3. Palier flottant magnétique suivant la revendication 1 ou 2, caractérisé en ce que les aimants permanents (3, 4) sont munis de pièces polaires en fer doux.

4. Palier flottant magnétique suivant l'une des revendications 1 à 3, caractérisé par le montage dans un compteur à roue de turbine pour la mesure du débit de liquides ou de gaz dans des conduits tubulaires, une enveloppe tubulaire (17) étant entourée de deux aimants permanents (3) disposés à distance l'un de l'autre et d'une bobine d'électroaimant (5) annulaire interposée entre eux, et le rotor (2), se trouvant dans l'enveloppe et étant équipé d'aubes, est muni à ses extrémités de deux aimants permanents (4), d'un corps ferromagnétique (16) interposé entre eux et d'un générateur de signaux pour transmettre à un récepteur de signaux fixé sur l'enveloppe des signaux proportionnels au nombre de tours au rotor.

5. Palier flottant magnétique suivant la revendication 4, caractérisé en ce qu'aux extrémités du rotor (2) sont disposées respectivement une bague métallique (24) et sur l'enveloppe (17) deux bobines (21) qui sont raccordées à un régulateur (7) régulant le courant d'excitation de la bobine d'électroaimant (5).

6. Palier flottant magnétique suivant la revendication 4 ou 5, caractérisé en ce que le rotor (2) est agencé en arbre creux (18) dans lequel sont disposés le corps ferromagnétique (16) et les deux aimants permanents (4).

7. Palier flottant magnétique suivant l'une des revendications 4 à 6, caractérisé en ce que le corps ferromagnétique (16) et les aimants permanents (4) du rotor (2) sont agencés en forme de douille.

8. Palier flottant magnétique suivant l'une des revendications 1 à 3, caractérisé par le montage dans un compteur électrique pour le montage sur palier de l'arbre tournant (25) disposé verticalement.

0 019 313

Fig.1

Fig.2

Fig.3

7

Fig.4

Fig.5